# EUROPEAN PATENT APPLICATION

(11) **EP 1 022 871 A1**
(43) Date of publication of application: **26.07.2000**
(21) Application number: 99309886.2
(22) Date of filing: 08.12.1999
(51) Int. Cl.: H04B 10/17

(54) **Duplex optical transmission system**

(30) Priority: 20.01.1999 GB 9901243
(71) Applicant: Nortel Networks Corporation, Montreal, Quebec H2Y 3Y4 (CA)
(72) Inventor: Jolley, Nigel Edward, Harlow, Essex CM20 3PN (GB); Rourke, Howard Neil, Bishop's Stortford, Herts. CM23 4HE (GB)
(74) Representative: Laurence, Simon French

(57) **Abstract**

In a duplex WDM transmission system, an optical amplifier (13) that uses different amplification paths (22, 25) for amplification of the different directions of signal propagation requires filters to keep the loop gain less than unity for all wavelengths within the amplification waveband. Simple high-pass and low-pass filters can be used when red channels are used for signals propagating in one direction, and blue ones for those propagating in the other. Comb filters (34, 37) are, however, required for use in any optical amplifier employed in such a transmission system using any form of interleaved form of channel allocation in place of the red/blue allocation. Examples of such amplifiers are described, these amplifiers having filters possessing a tandem arrangement of an optical isolator (41) and a series of Bragg reflection gratings (42).

## Description

### Background to the Invention

This invention relates to optical filtering in optical amplifiers designed for operation in duplex wavelength division multiplexed (WDM) optical transmission systems.

In many forms of optical transmission system there is a requirement for the facility for the transmission of data in both directions along a transmission highway. Such a highway may employ one optical transmission path for data propagating in one direction along the highway, and a different optical transmission path for data propagating in the opposite direction. In many instances there can however be advantage in adopting a duplex approach in which the same optical transmission path is employed for the transmission of data in both directions. In respect of each direction of propagation, such data may be transmitted in the form of WDM signals, with certain WDM channels assigned for one direction of data transmission propagation, and different channels assigned for the other direction of data transmission propagation. If the duplex transmission path includes an optical amplifier, such an amplifier typically has two optical pathways arranged optically in parallel such that signals propagating in one direction along the transmission path are amplified separately from those propagating in the opposite direction. (For the purposes of this specification the term 'duplex' is defined to mean that signal traffic is able to propagate simultaneously in both directions along a common transmission path, but that within the or each optical amplifier the signals propagating in the two directions are caused to propagate in physically separated transmission pathways.) An important consideration concerning the design of such an amplifier is the need for strong rejection, from each of its two pathways, of any signal power in channels assigned for the propagation of data that is properly to be amplified in the other pathway. In the absence of adequate rejection, undesirable multipath effects can result from power that is able to loop round both pathways of the amplifier. It will also be understood that it is necessary to maintain the loop gain less than unity for all wavelengths within the amplification band, and so prevent the occurrence of laser action.

In one known scheme of channel assignment for duplex transmission, every channel assigned for data transmission propagating in one direction has a centre frequency greater than that of every channel assigned for data transmission propagating in the other direction. This scheme of channel assignment is sometimes referred to as red/blue channel assignment. It has the advantage that rejection filtering in its optical amplifiers can be achieved by the use of optical filters respectively with low-pass and with high-pass spectral profiles. It also has the disadvantage that the channel assignment scheme can be particularly susceptible to problems arising from non-linear effects, particularly if the channels are evenly spaced in centre-frequency. For this reason it can be preferable to use a different scheme of channel assignment, one in which the channels assigned for data transmission propagating in one direction are at least somewhat interleaved in frequency with those assigned for data transmission propagating in the opposite direction. In this instance there is however the drawback that the rejection filters are required to possess more complex spectral profiles than the simple low-pass and high-pass profiles suitable for use with the red/blue scheme of channel assignment.

### Summary of the Invention

The present invention is directed to the obtaining of good rejection filtering in the two amplification paths of an optical amplifier for use in a transmission system employing interleaved channel assignment.

According to a first aspect of the present invention there is provided a duplex wavelength division multiplexed (WDM) transmission system in which members of a first set of signal channels are employed for data transmission in one direction while members of a second set of signal channels are employed for data transmission in the opposite direction,
which transmission system includes at least one optical amplifier in which optical amplification of said first and second sets of signal channels is provided respectively in physically separated first and second pathways, the first pathway including a channel rejection filter that rejects the second set of channels , and the second pathway including a rejection filter that rejects the first set of channels,
characterised in that each of said rejection filters includes at least one section comprising an optical isolator and a length of single mode optical waveguide in which is formed a series of Bragg reflection gratings, each grating being reflective over a waveband registering with a different one of the signal channels rejected by said rejection filter.

The technique by which Bragg reflection gratings are made is particularly suited to the manufacture of narrow reflection-band filters that are typically used in association with circulators to form narrow pass-band filters. In such an arrangement, if the circulator has ports 1, 2 and 3 arranged such that light launched into port 1 of the circulator emerges from it by way of its port 2, and such that light launched into port 2 of the circulator emerges from it by way of its port 3, then the Bragg reflection grating is formed in a single mode optical waveguide (typically an optical fibre waveguide) optically coupled with port 2; and port 1 forms the input to the narrow pass-band filter, while port 3 forms its output. By including a set of Bragg reflection gratings in the waveguide optically coupled with port 2, the arrangement can, in principle, function as a narrow pass-band comb filter. There are however a number of practical problems associated with implementing such a device. A major problem arises from the fact that Bragg reflection gratings are liable to be imperfectly apodised, and so the grating designed for reflecting one particular channel will also in practice be found to be partially reflecting (typically at -30dB) in at least some of the other channels. All these reflections will interfere with each other, causing undesirable multipath reflection effects. Another problem is that narrow-band Bragg reflection gratings suffer from chromatic dispersion that will distort the optical signals. Additionally the necessary spacing between adjacent Bragg reflection gratings will produce additional inter-channel dispersion.

In accordance with the teachings of the present invention optical filters are employed which similarly incorporate concatenations of Bragg reflection gratings, but in this instance the filters use only the transmitted components, the reflected components being discarded. This has a number of advantages. One is that the transmitted signals do not suffer chromatic dispersion in the device. Additionally multipath interference from unwanted reflections are typically at a very much lower level. A further advantage is that the filter design is such that more than one stage of device can readily be concatenated to provide enhanced performance.

The rejection filters of the present invention are types of comb filter. However, whereas in the case of a Fabry Pérot type comb filter, or an arrayed waveguide grating type comb filter, the teeth of the comb are regularly spaced in frequency; in the case of the rejection filters of the present invention, the value of the frequency interval between any adjacent pair of teeth can be selected independently of the value chosen in respect of any other pair of adjacent teeth. This property provides extra freedom in the assignment of channels in ways specifically designed to reduce the impact of four-wave mixing effects.

### Brief Description of the Drawings

Figure 1 schematically depicts a WDM duplex optical transmission system that includes one or more optical amplifiers,
Figure 2 schematically depicts a prior art amplifier for a WDM duplex optical transmission system,
Figure 3 schematically depicts an amplifier for a WDM duplex optical transmission system embodying the invention in a preferred form, and
Figures 4 and 5 schematically depict alternative forms of filter that can be employed in the amplifier of Figure 3, and
Figure 6 is a table illustrating a number of different possible channel assignment schemes for which the filters of Figures 4 and 5 may be configured.

### Detailed Description of Preferred Embodiments

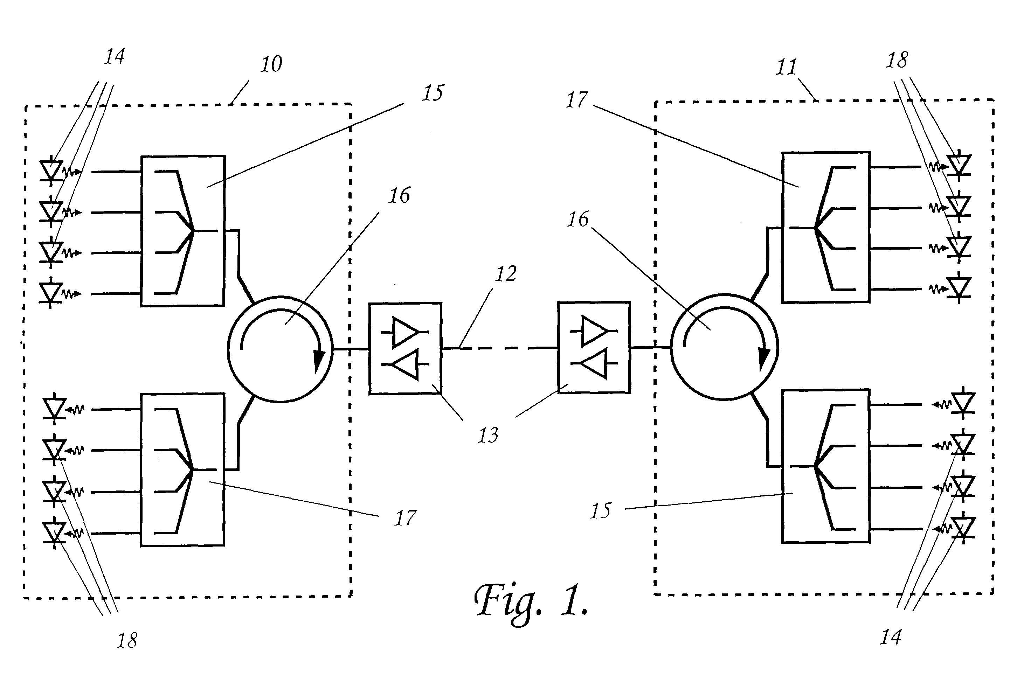

Figure 1 schematically depicts a WDM duplex transmission system having transceivers 10 and 11 located at opposite ends of a transmission path 12 that includes one or more optical amplifiers 13. Each transceiver has a set of optical transmitters 14 that launch their signals at different wavelengths into the transmission path 12 by way of a wavelength multiplexer 15 and a circulator 16. At the transceiver at the far end of the transmission path, these multiplexed signals are launched by its circulator into a wavelength demultiplexer 17. This demultiplexes the multiplexed signals and routes the demultiplexed signals, on an individual basis, to the individual members of a set of receivers 18.

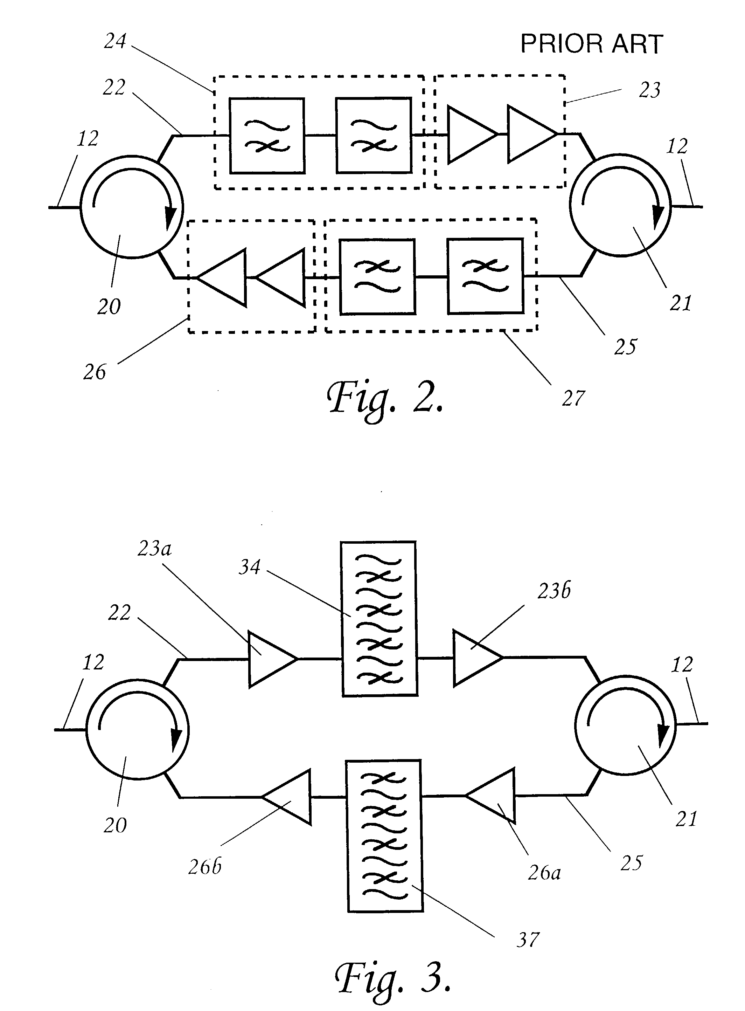

Figure 2 schematically depicts a prior art configuration of amplifier suitable for use as an amplifier 13 of Figure 1 in the circumstances in which the assignment of channels for duplex transmission is such that red channels are used for transmission in one direction, while blue channels are used for transmission in the other direction. At each end of the amplifier there is a circulator 20, 21. Light that is launched into the amplifier from the transmission path 12 by the way of circulator 20, is directed by way of optical pathway 22 to circulator 21, and from there back into transmission path 12. Optical pathway 22 includes an optical amplifier 23 and a high-pass filter 24. Both the amplifier 23 and the filter 24 may be formed in two or more parts, Figure 2 particularly illustrating the instance in which both filters are formed in two parts. The ordering of the parts, or of the component parts, is not necessarily as specifically illustrated. Different ordering of these parts may be desirable to suit different applications. For instance, with one particular configuration of two-part amplifier, the amplification provided by the first stage may be such that both parts of a two-part filter are best sited between the first and second parts of the amplifier. In another configuration, the amplification of the first stage may be such that the best configuration is to have this part of the amplifier located between the two parts of the filter. The high-pass filter 24 has its cut-off between the red and blue bands. It therefore allows the transmission of the blue channels, but blocks the transmission of the red channels.

Optically in parallel with the optical pathway 22 between the two circulators 20 and 21 is a second optical pathway 25. This includes an optical amplifier 26 corresponding to the optical amplifier 23 of the first pathway 22. It also includes an optical filter 27 corresponding to the optical filter 24 of the first pathway, but in this instance, whereas filter 24 is a high-pass filter, filter 27 is a low-pass filter that allows the transmission of the red channels while blocking the blue channels.

Figure 3 schematically depicts a configuration of amplifier suitable for use as an amplifier 13 of Figure 1 in circumstances in which the scheme of assignment of channels is an at least partially interleaved one. (For the purposes of this specification, in the context of schemes of assignment of channels in a duplex system, the term 'partially interleaved' is defined to mean that at least one channel assigned for data transmission in one direction has a centre frequency lying between the centre frequencies of two of the channels assigned for data transmission in the other direction; and that at least one channel assigned for data transmission in this other direction has a centre frequency lying between the centre frequencies of two of the channels assigned for data transmission in the opposite direction.) This amplifier is distinguished from that of Figure 3 primarily in that the high-pass and low-pass optical filters 24 and 27 of the amplifier of Figure 2 are, in the amplifier of Figure 3, replaced by comb filters 34 and 37. The amplifier of Figure 3 is specifically depicted as having its amplifiers 23 and 26 each formed in two parts 23a, 23b, 26a and 26b with, in both instances, the respective comb filters 34 and 37 positioned between the two parts. As explained previously with respect to the amplifier of Figure 2, different arrangements of amplifier and filter components are possible, but this particular arrangement is one that may typically be preferred. Elsewhere in Figure 3, the integers that are common to both amplifiers are provided with the same reference numerals as their counterparts in the amplifier of Figure 2.

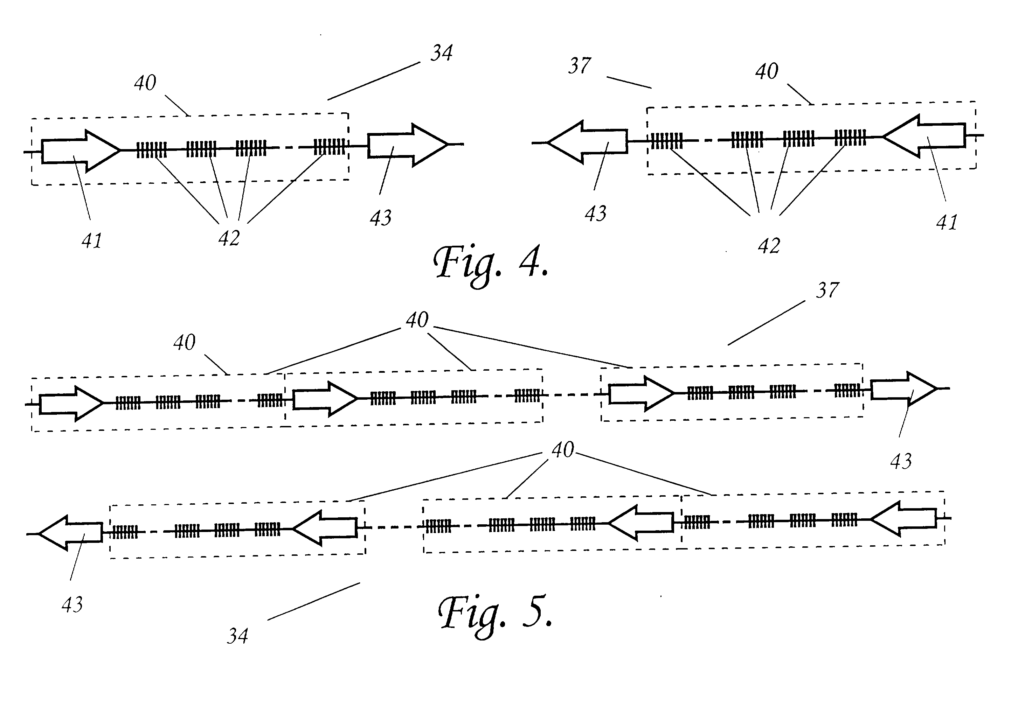

Figures 4 and 5 depict respectively single section and multiple section versions of the comb filters 34 and 37 of Figure 3. In each case, a section, which is depicted generally at 40, comprises an optical isolator 41 followed by a set of Bragg reflection gratings 42. In respect of a single section of comb filter 34, together with a single section of a corresponding single section of comb filter 37, each Bragg reflection grating of both sections reflects a different waveband from that of each of the other Bragg reflection gratings of those two sections. In the case of a section 40 of comb filter 34, there is a Bragg reflection grating with a reflection waveband corresponding with each one of the channels assigned for the transmission of data in the direction right-to-left through the amplifier of Figure 3, i.e. for the transmission of data that is designed to be amplified in pathway 25. Accordingly, powerthat lies within any signal channel assigned for propagating in the right-to-left direction through the amplifier of Figure 3 in pathway 25, and that leaks through circulator 20 into pathway 22 (or is otherwise reflected into this pathway) is reflected by one of the Bragg reflection gratings 42 of comb filter 34, and is disposed of by its associated isolator 41. Comb filter 34 is thus seen to act as a rejection filter that rejects any power propagating through pathway 22 that lies in any of the signal channels assigned for propagating through, and being amplified in, pathway 25. Comb filter 37 acts in a similar way in respect of any power propagating through pathway 25 that lies in any of the signal channels assigned for propagating through, and being amplified in, pathway 22. Optionally, both comb filters 34 and 37 may terminate with an additional isolator 43.

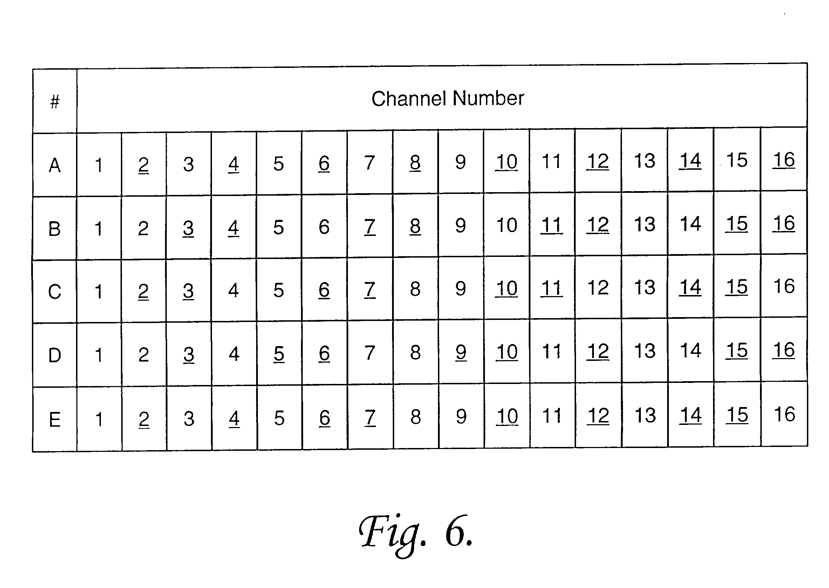

Typically, though not necessarily, the comb filters 34 and 37 are designed for an amplifier operating in a WDM duplex transmission system in which the channel frequencies are aligned to the frequencies of a uniformly spaced frequency grid, in one particular example a 100GHz grid. Numbering these channels in ascending (or descending) frequency order, one form of interleaved channel assignment scheme assigns odd-numbered channels, channels with centre-frequencies f₁ f₃ f₅ ... f₂ₙ₊₁ for the transmission of data in one direction, while the even-numbered channels, channels with centre-frequencies f₂ f₄ f₆ ... f₂ₙ₊₂ for the transmission of data in the other direction. The Table of Figure 6 shows, in respect of a sixteen channel system, this particular channel assignment scheme as Scheme A. In this figure, the channels that are propagating in one direction are signified by the underlining of those channel numbers, whereas the channels that are propagating in the opposite direction are signified by the absence of any underlining. The Figure also shows four other channel assignment schemes, respectively as Schemes B, C, D and E. Scheme A has the advantage, in comparison with red/blue channel assignment, that the frequency interval between co-propagating channels is doubled. On the other hand, the regularity of the channel assignment of this scheme means that there is still the possibility of significant four-wave mixing problems. Thus four-wave mixing occurring between co-propagating channels I and 3 produces a product registering with channel 5, which is also propagating in the same direction as channels 1 and 3. The problems of four-wave mixing are at least somewhat ameliorated by adopting channel assignment Scheme B. In this instance the four-wave mixing occurring between co-propagating channels I and 2 produces a product registering with channel 3, but channel 3 is propagating in the opposite direction, and so this product does not cause any problem. On the other hand, there is still a problem with the four-wave mixing occurring for instance between co-propagating channels I and 5 producing a product registering with channel 9, which is also propagating in the same direction as channels 1 and 5. The greater spectral separation between channels 1 and 5, in comparison with that between channels 1 and 3, means that this four-wave mixing problem is generally liable to be of less consequence than the four-wave mixing problem discussed above in relation to Scheme A. Scheme C is very similar to Scheme B, being in essence Scheme B slipped by one channel. Schemes D and E are channel assignment schemes having a less regular pattern than Schemes C and D, and in consequence are generally liable to present a reduced magnitude of four-wave mixing problem.

## Claims

1. A duplex wavelength division multiplexed (WDM) transmission system in which members of a first set of signal channels are employed for data transmission in one direction while members of a second set of signal channels are employed for data transmission in the opposite direction,
which transmission system includes at least one optical amplifier (13) in which optical amplification of said first and second sets of signal channels is provided respectively in physically separated first and second pathways (22, 25), the first pathway (22) including a channel rejection filter (34) that rejects the second set of channels , and the second pathway (25) including a rejection filter (37) that rejects the first set of channels,
characterised in that each of said rejection filters includes at least one section (40) comprising an optical isolator (41) and a length of single mode optical waveguide in which is formed a series of Bragg reflection gratings (42), each grating being reflective over a waveband registering with a different one of the signal channels rejected by said rejection filter.

2. A duplex WDM transmission system as claimed in claim 1, wherein each rejection filter of said amplifier includes a concatenation of at least two of said sections optically in series.

3. A duplex WDM transmission system as claimed in claim 1, wherein each rejection filter of said amplifier terminates in an optical isolator (43).

4. A duplex WDM transmission system as claimed in claim 1, wherein each rejection filter of said amplifier is a comb filter with teeth that are not all regularly spaced in frequency.
